# EUROPÄISCHE PATENTSCHRIFT

(11) **EP 3 815 835 B1**
(45) Veröffentlichungstag und Bekanntmachung des Hinweises auf die Patenterteilung: **11.10.2023**
(21) Anmeldenummer: 19206831.0
(22) Anmeldetag: 04.11.2019
(51) Int. Cl.: B23K 26/064, B23K 26/066, B23K 26/14, B23K 26/38

(54) **LASERBEARBEITUNGSKOPF UND VERFAHREN ZUM LASERBEARBEITEN EINES WERKSTÜCKS**
LASER MACHINING HEAD AND METHOD FOR LASER MACHINING A WORKPIECE
TÊTE D'USINAGE AU LASER ET PROCÉDÉ D'USINAGE AU LASER D'UNE PIÈCE

(43) Veröffentlichungstag der Anmeldung: 05.05.2021
(73) Patentinhaber: Bystronic Laser AG, 3362 Niederönz (CH)
(72) Erfinder: DUBACH, Beat, 3360 Herzogenbuchsee (CH); BURRI, Markus, 3400 Burgdorf (CH); LÜDI, Andreas, 3400 Burgdorf (CH)
(74) Vertreter: Patentanwälte Geyer, Fehners & Partner mbB

(56) Entgegenhaltungen:
- WO-A1-2014/155846
- JP-A- 2016 043 392
- US-A1- 2008 314 880
- US-A1- 2017 052 381

## Beschreibung

Die vorliegende Erfindung betrifft einen Laserbearbeitungskopf, eine Verwendung eines Laserbearbeitungskopfs und ein Verfahren zum Laserbearbeiten eines Werkstücks.

Bei der Laserbearbeitung von Werkstücken, insbesondere bei Verfahren zum thermischen Trennen von Werkstoffen mittels Laserstrahlung, wie Laserschneiden, werden Laserbearbeitungsvorrichtungen eingesetzt. In vielen Fällen wird dabei ein Laserbearbeitungskopf genutzt, der den Bearbeitungslaserstrahl auf das Werkstück führt, beispielsweise auf ein zu bearbeitendes Blech. Eine Hauptanforderung bei der Bearbeitung von Werkstücken ist es, die Qualität der Bearbeitung hoch zu halten. Beim Laserschneiden wird typischerweise ein Schneidgas, auch Prozessgas genannt, benutzt, das aktiv oder inert sein kann.

Beispielweise in Flachbettschneidanlagen wird das Werkstück mit einem Laserstrahl und einem Gasstrahl, der als Schneidgas dient, bearbeitet. Der Bearbeitungskopf ist dabei als Schneidkopf ausgeführt und leitet die beiden Strahlen in optimaler Ausprägung auf das Werkstück.

Beim Laserschneiden mit einem aktiven Schneidgas, wie z.B. Sauerstoff, wird das beispielsweise metallische Material des Werkstücks verbrannt, nachdem es vom Laserstrahl auf die Zündtemperatur erhitzt wurde. Diese Art von Laserschneiden wird auch Brennschneiden genannt. Die Reaktion zwischen Sauerstoff und dem Material des Werkstücks erzeugt zusätzliche Wärme, die den Schneidprozess unterstützt. Das geschmolzene flüssige Material, das eine geringe Viskosität hat, kann von der Schnittkante oder aus dem Schnittspalt durch die Scherkräfte des Gases entfernt werden. Beim Schneiden mit einem inerten Gas, wie Stickstoff oder Argon, wird das Material des Werkstücks nur durch die Laserleistung geschmolzen und kann aus dem Schnittspalt durch die kinetische Energie des Gasstroms ausgeblasen werden. Diese Art von Laserschneiden wird auch Schmelzschneiden genannt.

EP1859891 A1 beschreibt eine Blende, die in einem Laserresonator einer Laserbearbeitungsmaschine vorgesehen ist, um einen Strahlmode automatisch auszuwählen und den Außendurchmesser des Laserstrahles zu begrenzen. JP2016043392 A beschreibt die Bereitstellung eines Laserschneidbearbeitungsverfahrens zum Ändern eines Arbeitsmodus von einer Nichtoxidationsbearbeitung zu einer Oxidationsbearbeitung oder von der Oxidationsbearbeitung zu der Nichtoxidationsbearbeitung durch Positionseinstellung einer Öffnung in einer Richtung einer optischen Achse. US2008/314880 A1 betrifft eine Laserbearbeitungsmaschine mit einer Fokussieroptik, die den Laserstrahl innerhalb eines Strahlführungshohlraums zwischenzeitlich fokussiert. Die Laserbearbeitungsmaschine umfasst auch eine im Bereich des Zwischenfokus angeordnete optische Blende zur Bildung des Laserstrahls. US2017/052381 A1 betrifft Laserabgabesysteme mit variablen Polarisatoren und Strahlformern zum Ändern der Polarisation und/oder Form des Ausgangsstrahls zum Bearbeiten verschiedener Materialien.

Auch in Laserbearbeitungsköpfen, wie z.B. Schneidköpfen zur Materialbearbeitung mit Faserlaser, ist typischerweise eine Blende im Strahlengang des Bearbeitungslasers vorgesehen. Die Blende bezweckt einerseits, dass die im Laserbearbeitungskopf vorhandenen optischen Elemente vor stark divergierender Laserstrahlung (meist Streulicht) geschützt werden. Andererseits schützt die Blende auch das Faserende vor Rückreflexen, welche unter grossem Polarwinkel zurück auf das Faserende treffen könnten.

Es wurde gefunden, dass die im Laserbearbeitungskopf vorgesehene Blende eine für das Laserschneiden relevante Laserstrahlformung vornimmt. Brennschneiden, z.B. Laserschneiden mit Sauerstoff, gelingt besser, wenn die Blende relativ klein gewählt wird. Das bessere Schneidverhalten beim Brennschneiden mit kleiner Blende kann damit erklärt werden, dass rund um den Laserstrahl eine gewisse Randstrahlung vorhanden ist, die durch die Blende reduziert wird. Die Randstrahlung kann unter anderem aus der Ummantelung einer Transportfaser für den Bearbeitungslaserstrahl stammen und das zu bearbeitende Werkstück um die Bearbeitungszone unerwünscht aufwärmen.

Ein Nachteil einer kleinen Blende ist allerdings, dass damit Laserleistung - typischerweise ca. 2-3% - abgeschnitten und nicht genutzt wird. Bei einem 10 kW Laserstrahl sind dies merkliche 250 W. Je mehr die Leistung steigt, umso bedeutsamer wird diese Leistungsreduktion. Dabei wird der Laserbearbeitungskopf aufgrund von Absorption, Streuung und Reflektion der Laserstrahlung unerwünscht aufgeheizt. Ein aufgeheizter Laserbearbeitungskopf hat verschiedene Nachteile. Beispielsweise können verschiedene, im Innenraum des Bearbeitungskopfes vorhandene Materialien, z.B. von Dichtungen, ausgasen, was zu Kontaminationen optischer Elemente führen kann. Zudem wird eine größere Kühlleistung zum Kühlen des Laserbearbeitungskopfes benötigt.

Ein weiterer Nachteil einer kleinen Blende im Laserbearbeitungskopf ist, dass die abgeschnittene und ungenutzte Laserleistung nicht für den Bearbeitungsprozess zur Verfügung steht. Insbesondere beim Schmelzschneiden hängt die Produktivität des Laserbearbeitungsprozesses maßgeblich von der verfügbaren Leistung und/oder von dem je nach verfügbarer Leistung gewählten Vorschub ab.

Aufgabe ist es, einen Laserbearbeitungskopf und ein Verfahren zur Laserbearbeitung eines Werkstücks anzugeben, die eine hohe Produktivität der damit durchgeführten Laserbearbeitungsprozesse ermöglichen.

Diese Aufgabe wird gelöst durch einen Laserbearbeitungskopf nach Anspruch 1, eine Verwendung eines Laserbearbeitungskopfes nach Anspruch 6 und ein Verfahren nach Anspruch 7.

Eine Ausführungsform der Erfindung stellt einen Laserbearbeitungskopf zur Laserbearbeitung eines Werkstücks, insbesondere zum Laserschneiden beinhaltend Brennschneiden und Schmelzschneiden, bereit, mit einer Schnittstelle für eine Bearbeitungslaserquelle zum Erzeugen eines Bearbeitungslaserstrahls; und einer Einrichtung zum Formen des Bearbeitungslaserstrahls senkrecht zu seiner Ausbreitungsrichtung, wobei die Einrichtung zum Formen des Bearbeitungslaserstrahls mindestens eine Durchgangsöffnung für den Bearbeitungslaserstrahl aufweist, deren Abstand zur Schnittstelle einstellbar ist, wobei die Einrichtung zum Formen des Bearbeitungslaserstrahls mindestens eine Blende aufweist, die die mindestens eine Durchgangsöffnung bereitstellt, und die Oberfläche der mindestens einen Blende ausgebildet ist zum Absorbieren der Leistung der Bearbeitungslaserquelle in einem Anteil von mindestens 90%.

Durch Einstellen des Abstands der Durchgangsöffnung zur Schnittstelle kann dem Bearbeitungslaserstrahl eine unterschiedliche und variable effektive Größe der Durchgangsöffnung präsentiert werden. Die effektive Größe der Durchgangsöffnung ist vorliegend als die Begrenzung der möglichen Divergenz des ausbreitenden Strahlenbündels zu verstehen. Beim Brennscheiden kann die effektive Größe der Durchgangsöffnung bevorzugt kleiner als beim Schmelzschneiden gewählt werden. Ausführungsformen des Laserbearbeitungskopfes ermöglichen eine einfache Einstellung der Numerischen Apertur der Einrichtung zum Formen des Bearbeitungslaserstrahls, d.h. eine einfache Einstellung des Divergenzwinkels, unter welchem sich der Laserstrahl ausbreiten kann. Der Bearbeitungslaserstrahl wird auf diese Weise senkrecht zu seiner Ausbreitungsrichtung geformt, kann aber auch in weiteren Raumrichtungen geformt werden, beispielsweise parallel zu seiner Ausbreitungsrichtung.

Durch Einstellen des Abstands der Durchgangsöffnung zur Schnittstelle kann ferner die Position der Durchgangsöffnung im Strahlengang des Bearbeitungslaserstrahls an den gewünschten Bearbeitungsprozess angepasst werden. Beim Brennschneiden kann die Durchgangsöffnung weiter entfernt von der Schnittstelle positioniert werden als beim Schmelzschneiden. Dadurch wird beim Brennschneiden der Laserstrahl im Randbereich stärker begrenzt als beim Schmelzschneiden. Auf diese Weise kann beim Schmelzschneiden eine Bearbeitungslaserquelle größerer Leistung eingesetzt werden als beim Brennschneiden, wobei jeweils eine optimale Laserleistung und eine optimale Produktivität des Bearbeitungsprozesses bereitgestellt werden kann. Zudem wird in beiden Bearbeitungsprozessen das Aufheizen des Bearbeitungskopfes minimiert. Außerdem kann der Abstand der Durchgangsöffnung dem individuell eingesetzten Laserstrahl angepasst werden. Jeder Laserstrahl hat eine gewisse Divergenz, abhängig vom Strahlparameterprodukt (BPP, Beam Parameter Product) des Laserstrahles oder von einer für den Laserstrahl genutzten Transportfaser. Die Divergenz kann somit je nach der an der Schnittstelle vorgesehenen Bearbeitungslaserquelle und/oder Transportfaser variieren. Mit einem variablen Abstand der Durchgangsöffnung zur Schnittstelle kann diesen Strahlunterschieden Rechnung getragen werden.

In dem Laserbearbeitungskopf kann eine Numerische Apertur der Einrichtung zum Formen des Bearbeitungslaserstrahls einstellbar sein. Durch Einstellen des Abstands der Durchgangsöffnung zur Schnittstelle kann nämlich die Numerische Apertur für den Bearbeitungslaserstrahl und damit der Divergenzwinkel, unter welchem sich der Bearbeitungslaserstrahl ausbreiten kann, verändert werden. Die Numerische Apertur kann in einem Wertebereich von kleiner oder gleich 0,125, insbesondere zu kleineren Werten hin, einstellbar sein.

Die Numerische Apertur der Einrichtung zum Formen des Bearbeitungslaserstrahls kann für ein Brennschneiden in einem Wertebereich von 0,09 bis 0,125, bevorzugt von 0,09 bis 0,115, mehr bevorzugt von 0,095 bis 0,105, einstellbar sein. Die Numerische Apertur der Einrichtung zum Formen des Bearbeitungslaserstrahls kann für ein Schmelzschneiden auf einen Wert größer oder gleich 0,1 einstellbar sein. Die Numerische Apertur kann für ein Schmelzschneiden bevorzugt grösser sein und wird lediglich zwecks Verhinderung eines Überstrahlens von Optiken begrenzt.

Der Abstand der mindestens einen Durchgangsöffnung zur Schnittstelle und/oder die Numerische Apertur der Einrichtung zum Formen des Bearbeitungslaserstrahls können in Abhängigkeit von einem Prozessgas, der Größe der Durchgangsöffnung, der für die Laserbearbeitung gewählten oder eingestellten Leistung der Bearbeitungslaserquelle, der Strahlform und/oder der Divergenz des von der Bearbeitungslaserquelle erzeugten Bearbeitungslaserstrahls einstellbar sein. Insbesondere kann die Numerische Apertur der Einrichtung zum Formen des Bearbeitungslaserstrahls in Abhängigkeit von einer für die Laserbearbeitung gewählten oder eingestellten Leistung der Bearbeitungslaserquelle, d.h. in Abhängigkeit von dem beabsichtigten Bearbeitungsprozess, einstellbar sein.

In Ausführungsformen weist die Einrichtung zum Formen des Bearbeitungslaserstrahls mindestens eine Blende auf, die die mindestens eine Durchgangsöffnung bereitstellt. Der Abstand der Durchgangsöffnung zur Schnittstelle kann also durch Einstellen des Abstands der Blende zur Schnittstelle eingestellt werden. Auf diese Weise kann in Abhängigkeit von der Position der Blende im Strahlengang dem Bearbeitungslaserstrahl eine unterschiedliche effektive Größe der Durchgangsöffnung präsentiert werden. Die Durchgangsöffnung kann so je nach Applikation und/oder individuellem Laserstrahl ideal gross gewählt werden. Beim Brennschneiden kann sie kleiner gewählt werden als beim Schmelzschneiden.

Die mindestens eine Durchgangsöffnung für den Bearbeitungslaserstrahl, insbesondere die vorgenannte Blende, kann ferner in Ausbreitungsrichtung und/oder entgegen der Ausbreitungsrichtung verschiebbar sein. Zudem kann die Einrichtung zum Formen des Bearbeitungslaserstrahls mehrere Durchgangsöffnungen gleicher oder unterschiedlicher Größe aufweisen, die im Strahlengang des Bearbeitungslaserstrahls mit variablen Abständen zur Schnittstelle positionierbar sind. Dies ermöglicht eine hohe Variabilität für die Einstellung der Numerischen Apertur der Einrichtung zum Formen des Bearbeitungslaserstrahls.

Außerdem kann die Oberfläche der Einrichtung zum Formen des Bearbeitungslaserstrahls derart ausgebildet sein, dass die Leistung der Bearbeitungslaserquelle in einem Anteil von mindestens 90%, bevorzugt in einem Anteil von mindestens 95%, mehr bevorzugt in einem Anteil von 100%, absorbiert und/oder der Bearbeitungslaserstrahl in einem Anteil von höchstens 10%, bevorzugt in einem Anteil von höchstens 5%, mehr bevorzugt in einem Anteil von 0%, reflektiert wird. Ferner kann die Oberfläche der mindestens einen Blende ausgebildet sein zum Absorbieren der Leistung der Bearbeitungslaserquelle in einem Anteil von mindestens 95%, mehr bevorzugt in einem Anteil von 100%, und/oder zum Reflektieren des Bearbeitungslaserstrahls in einem Anteil von höchstens 10%, bevorzugt von höchstens 5%, mehr bevorzugt in einem Anteil von 0%. Das Ausmaß der Absorption und/oder das Ausmaß der Reflektion des Bearbeitungslaserstrahls durch die Einrichtung zum Formen des Bearbeitungslaserstrahls, z.B. der vorgenannten Blende, kann auf diese Weise optimiert werden.

In Ausführungsformen kann die Einrichtung zum Formen des Bearbeitungslaserstrahls eine Vorrichtung zur Kühlung ihrer Oberfläche, insbesondere der Oberfläche der mindestens einen Blende, aufweisen.

Ferner kann die Leistung der Bearbeitungslaserquelle in einem Wertebereich von 500 W bis 30 kW, bevorzugt kleiner oder gleich 20 kW, mehr bevorzugt kleiner oder gleich 10 kW, gewählt oder einstellbar sein.

Eine weitere Ausführungsform der Erfindung betrifft eine Verwendung eines Laserbearbeitungskopfes nach einer der vorstehenden Ausführungsformen zum Laserschneiden beinhaltend Brennschneiden und/oder Schmelzschneiden eines Werkstücks.

In einer Ausführungsform der Erfindung wird ein Verfahren zum Laserbearbeiten eines Werkstücks, insbesondere zum Laserschneiden beinhaltend Brennschneiden und Schmelzschneiden, mit einem Laserbearbeitungskopf nach einer der vorstehenden Ausführungsformen angegeben. Dabei ist der Laserbearbeitungskopf an der Schnittstelle mit einer Bearbeitungslaserquelle zum Erzeugen eines Bearbeitungslaserstrahls verbunden. Das Verfahren weist auf
- Erzeugen des Bearbeitungslaserstrahls;
- Bestrahlen des Werkstücks mit dem Bearbeitungslaserstrahl; und
- Formen des Bearbeitungslaserstrahls senkrecht zu seiner Ausbreitungsrichtung, wobei der Abstand der mindestens einen Durchgangsöffnung zur Schnittstelle eingestellt wird.

In Ausführungsformen des Verfahrens kann die Numerische Apertur der Einrichtung zum Formen des Bearbeitungslaserstrahls eingestellt werden. Ferner kann die Numerische Apertur der Einrichtung zum Formen des Bearbeitungslaserstrahls in einem Wertebereich von kleiner oder gleich 0,125, insbesondere hin zu kleineren Werten, eingestellt werden. Die Numerische Apertur der Einrichtung zum Formen des Bearbeitungslaserstrahls kann für ein Brennschneiden in einem Wertebereich von 0,09 bis 0,125, bevorzugt von 0,09 bis 0,115, mehr bevorzugt von 0,095 bis 0,105, eingestellt werden. Die Numerische Apertur der Einrichtung zum Formen des Bearbeitungslaserstrahls kann für ein Schmelzschneiden auf einen Wert größer oder gleich 0,1 eingestellt werden. Ferner kann der Abstand der mindestens einen Durchgangsöffnung zur Schnittstelle und/oder die Numerische Apertur der Einrichtung zum Formen des Bearbeitungslaserstrahls in Abhängigkeit von einem Prozessgas, der Größe der Durchgangsöffnung, der für die Laserbearbeitung gewählten oder eingestellten Leistung der Bearbeitungslaserquelle, der Strahlform und/oder der Divergenz des von der Bearbeitungslaserquelle erzeugten Bearbeitungslaserstrahls eingestellt werden.

Im Verfahren von Ausführungsformen kann die mindestens eine Durchgangsöffnung für den Bearbeitungslaserstrahl in Ausbreitungsrichtung und/oder entgegen der Ausbreitungsrichtung verschoben werden. Ferner kann die Einrichtung zum Formen des Bearbeitungslaserstrahls mehrere Durchgangsöffnungen gleicher oder unterschiedlicher Größe aufweisen, die im Strahlengang des Bearbeitungslaserstrahls mit variablen Abständen zur Schnittstelle positioniert werden.

In weiteren Ausführungsformen des Verfahrens kann die Oberfläche der Einrichtung zum Formen des Bearbeitungslaserstrahls, insbesondere die Oberfläche der mindestens einen Blende, gekühlt werden. Des Weiteren kann die Leistung der Bearbeitungslaserquelle in einem Wertebereich von 500 W bis 30 kW, bevorzugt kleiner oder gleich 20 kW, mehr bevorzugt kleiner oder gleich 10 kW, gewählt oder eingestellt werden.

In dem Verfahren von Ausführungsformen kann für ein Brennschneiden des Werkstücks die Numerische Apertur der Einrichtung zum Formen des Bearbeitungslaserstrahls kleiner oder gleich 0,125 eingestellt werden und die Leistung der Bearbeitungslaserquelle kleiner oder gleich 20 kW, bevorzugt kleiner oder gleich 10 kW, mehr bevorzugt kleiner oder gleich 6 kW, gewählt oder eingestellt werden. Für ein Schmelzschneiden kann die Numerische Apertur der Einrichtung zum Formen des Bearbeitungslaserstrahls größer oder gleich 0,1 eingestellt werden und die Leistung der Bearbeitungslaserquelle größer oder gleich 6 kW, bevorzugt größer oder gleich 10 kW, gewählt oder eingestellt werden.

Mit den Verfahren zur Laserbearbeitung eines Werkstücks der vorstehenden Ausführungsformen können die gleichen Vorteile, Betriebsmodi und Funktionen realisiert werden, wie mit den Ausführungsformen des Laserbearbeitungskopfes, insbesondere mit gleichlautenden und/oder analogen Merkmalen.

Weitere Merkmale und Zweckmäßigkeiten ergeben sich aus der folgenden Beschreibung von Ausführungsformen, den Figuren und den Unteransprüchen.

Alle hier beschriebenen und sich nicht gegenseitig ausschließenden Merkmale von Ausführungsformen können miteinander kombiniert werden. Gleiche Elemente der Ausführungsformen sind in der folgenden Beschreibung mit den gleichen Bezugszeichen versehen. Einzelne oder mehrere Elemente einer Ausführungsform können in den anderen Ausführungsformen genutzt werden ohne weitere Erwähnung. Ausführungsformen der Erfindung werden nun durch die nachfolgenden Beispiele anhand von Figuren genauer beschrieben, ohne sie dadurch einschränken zu wollen. Es zeigen:
Fig. 1a und 1b schematisch einen Bearbeitungskopf 10 zur Laserbearbeitung eines Werkstücks als ein Beispiel gemäß Ausführungsformen der Erfindung;
Fig. 2a und 2b schematisch den Bearbeitungskopf 10 im Einsatz während eines Verfahrens zum Laserbearbeiten gemäß Ausführungsformen der Erfindung;
Fig. 3a und 3b schematisch beispielhafte Blenden des Bearbeitungskopfs 10 in einer Ansicht senkrecht zur optischen Achse der Durchgangsöffnung; und
Fig. 4a und 4b schematisch beispielhafte Blenden des Bearbeitungskopfs 10 in einer Ansicht senkrecht zur optischen Achse der Durchgangsöffnung.

In der nachfolgenden Beschreibung von Ausführungsformen und Beispielen wird der Bearbeitungslaserstrahl synonym auch als Laserstrahl bezeichnet. Die Begriffe "einstellen" oder "wählen" umfassen den Begriff "variieren". Analoges gilt für Abwandlungen dieser Begriffe. Ferner gilt hier für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können.

Außerdem werden der Laserbearbeitungskopf zur Laserbearbeitung und das Verfahren zum Laserbearbeiten eines Werkstücks in Beispielen zum Laserschneiden eingesetzt, ohne die Erfindung darauf zu beschränken.

In allen Ausführungsformen können der Bearbeitungskopf, die Einrichtung zum Formen des Bearbeitungslaserstrahls und/oder die Bearbeitungslaserquelle derart ausgebildet sein und/oder das Verfahren zum Laserbearbeiten eines Werkstücks kann derart durchgeführt werden, dass ein kontinuierlicher und/oder diskontinuierlicher, insbesondere gepulster, Bearbeitungslaserstrahl bereitgestellt wird. Der Bearbeitungskopf, die Einrichtung zum Formen des Bearbeitungslaserstrahls und/oder die Bearbeitungslaserquelle können mit einer Steuerungseinheit drahtgebunden oder drahtlos datenleitend verbunden sein oder eine solche enthalten, und mit der Steuerungseinheit steuerbar sein.

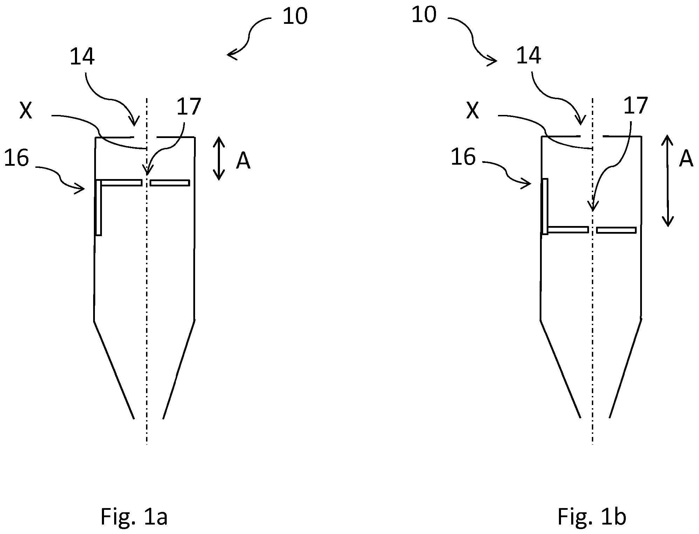

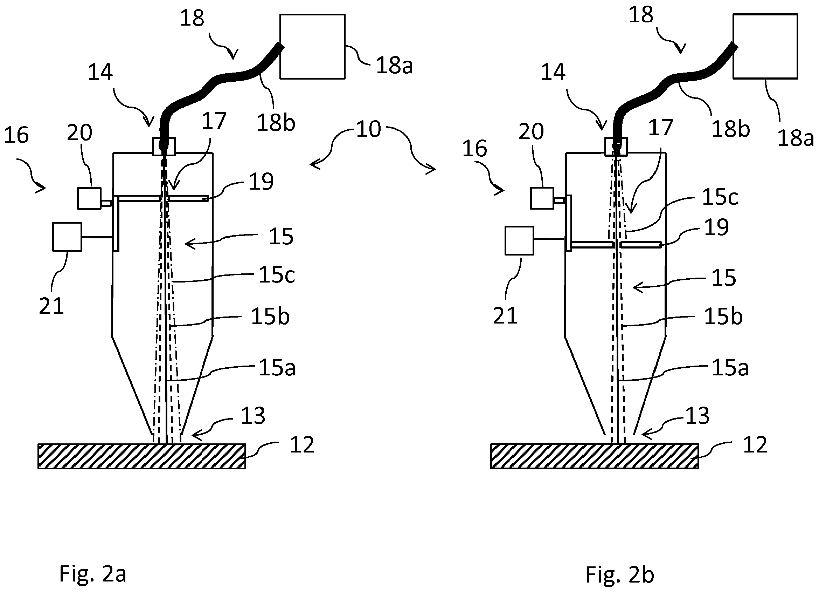

Fig. 1a und 1b veranschaulichen schematisch ein Beispiel eines Laserbearbeitungskopfs 10 gemäß Ausführungsformen der Erfindung. Fig. 2a und 2b zeigen den Laserbearbeitungskopf 10 im Betrieb unter Bereitstellung eines Bearbeitungslaserstrahls 15 zur Laserbearbeitung eines Werkstücks 12.

Der Laserbearbeitungskopf 10 besitzt eine Schnittstelle 14 zur Ankopplung einer Bearbeitungslaserquelle 18, mit der der Laserstrahl 15 erzeugt wird. Wie in Fig. 1a und 1b gezeigt ist, ist im Laserbearbeitungskopf 10 eine Einrichtung 16 zum Formen des Laserstrahls 15 vorgesehen. Die Einrichtung 16 ist mit einer zentralen Durchgangsöffnung 17 für den Laserstrahl 15 versehen. Die Einrichtung 16 ist derart ausgebildet, dass der Abstand A der Durchgangsöffnung 17 zur Schnittstelle 14 entlang einer optischen Achse (oder Strahlachse) X unterschiedlich eingestellt werden kann. Die Ausbreitungsrichtung des Bearbeitungslaserstrahls kann als parallel zur optischen Achse verstanden werden. In der Einstellung gemäß Fig. 1a und 2a ist der Abstand A zur Schnittstelle kleiner gewählt als in der Einstellung gemäß Fig. 1b und 2b.

Zum Beispiel ist die Durchgangsöffnung 17 zentral in einer Blende 19 vorgesehen (in Fig. 2a und 2b gezeigt) . Die Blende 19 kann beispielsweise mittels einem Werkzeugschlitten oder einer Gewindespindel parallel zur Ausbreitungsrichtung des Laserstrahls 15 verschoben werden.

Um den Abstand A der Durchgangsöffnung 17 zur Schnittstelle 14 einzustellen, kann die Einrichtung 16 zum Formen des Laserstrahls mit einem Antrieb 21 versehen sein (in Fig. 2a und 2b gezeigt). Zum Beispiel können der oben erwähnte Werkzeugschlitten mit einem Linearmotor oder die oben genannte Gewindespindel mit einem Elektromotor betreibbar sein. Der Antrieb 21 kann ferner mittels einer Steuerungseinheit (nicht gezeigt) ansteuerbar sein. Der Antrieb 21 ermöglicht, dass der Abstand A und damit die Numerische Apertur automatisiert, zum Beispiel auch während eines Laserschneidprozesses, variiert werden kann.

Die Numerische Apertur kann beispielsweise im Falle einer kreisförmigen Durchgangsöffnung 17 als D/2A definiert sein, mit D als Durchmesser der Durchgangsöffnung 17.

In einer Modifikation des Beispiels ist die Einrichtung 16 zum Formen des Laserstrahls mit einer Vorrichtung 20 zur Kühlung ihrer Oberfläche, die mit dem Laserstrahl beaufschlagt wird, ausgestattet (in Fig. 2a und 2b gezeigt). Beispielsweise kann die Vorrichtung zur Kühlung interne Kühlleitungen aufweisen und als Kühlmittel kann z.B. Wasser genutzt werden. Bei Vorhandensein einer Blende 19 kann die Blendenoberfläche oder die gesamte Blende mittels der Vorrichtung 20 kühlbar sein.

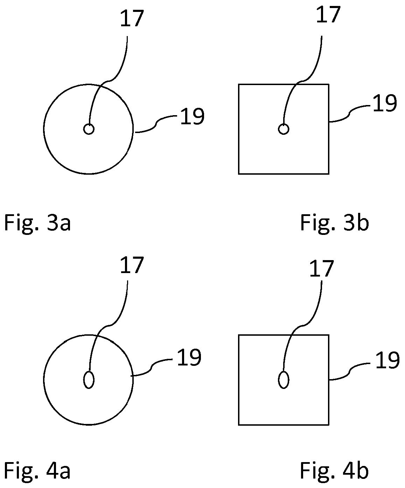

Die Durchgangsöffnung 17 kann, insbesondere senkrecht zur optischen Achse X, kreisförmig ausgebildet sein, wie beispielhaft in den Fig. 3a und 3b dargestellt ist. Die Durchgangsöffnung 17 kann insbesondere bei einem polarisierten Laserstrahl eine von der Kreisform abweichende Kontur aufweisen, wie in 4a und 4b gezeigt ist, zum Beispiel eine ovale Kontur. Die äußere Begrenzung der Blende 19 kann kreisförmig, wie in Fig. 3a und 4a gezeigt, oder quadratisch, wie in Fig. 3b und 4b dargestellt, ausgebildet sein. Die Form der äußeren Begrenzung der Blende 19 kann an die Gehäuseform des Bearbeitungskopfs angepasst sein.

In einer anderen Modifikation des Beispiels ist die Einrichtung 16 zum Formen des Bearbeitungslaserstrahls und die Blende 19 mit einer tiefschwarzen Oberflächenbeschichtung versehen. Beispielhafte Materialien hierfür sind Beschichtungen, wie sie von Acktar Ltd. (19 Topaz St. P.O.B. 8643 Kiryat-Gat, 8213513, Israel) angeboten werden. Auf diese Weise ist die bestrahlte Oberfläche der Einrichtung 16 zum Formen des Bearbeitungslaserstrahls derart ausgebildet, dass die Leistung der Bearbeitungslaserquelle 18 in einem Anteil von mindestens 90%, absorbiert und/oder der Bearbeitungslaserstrahl 15 in einem Anteil von höchstens 10% reflektiert wird. Dies gilt für den Teil des Laserstrahls 15, mit dem die Oberfläche beaufschlagt wird.

Im Betrieb, wie in Fig. 2a und 2b veranschaulicht, ist der Bearbeitungskopf 10 an der Schnittstelle 14 mit der Bearbeitungslaserquelle 18 gekoppelt. In diesem Beispiel umfasst die Bearbeitungslaserquelle 18 eine Transportfaser 18a und mindestens ein Laserquellenmodul 18b. An der Schnittstelle 14 ist die Transportfaser 18b vorgesehen, die die das Laserquellenmodul 18a mit dem Bearbeitungskopf 10 Laserlichtleitend verbindet. Alternativ kann das Laserquellenmodul 18a direkt an der Schnittstelle 14 des Bearbeitungskopfs 10 vorgesehen sein.

Mit der Bearbeitungslaserquelle 18 wird im vorliegenden Beispiel ein divergierender Laserstrahl 15 erzeugt, der einen Kernbereich 15a und zwei Randbereiche 15b und 15c besitzt, wobei der Laserstrahl 15 entlang der optischen Achse X verläuft. Die Randbereiche 15b und 15c sind in Fig. 2a und 2b mit unterschiedlichen, gestrichelten Linien dargestellt. Das Laserquellemodul 18a und/oder die Transportfaser 18b stellen vorliegend eine Laserleistung von ungefähr 500 W bis 30 kW bereit und erzeugen den Bearbeitungslaserstrahl 15 in einem Spektralbereich, der eine Wellenlänge von 1070 nm beinhaltet. Es können jedoch auch Bearbeitungslaserquellen, Laserquellenmodule und/oder Transportfasern verwendet werden, die andere Spektralbereiche bereitstellen.

Im Betrieb wird der Laserstrahl 15 mit der Bearbeitungslaserquelle 18 erzeugt, mit dem Laserbearbeitungskopf 10 auf das Werkstück 12 gerichtet und mit einer Vorschubgeschwindigkeit darüber geführt.

Zunächst wird im vorliegenden Beispiel ein Schmelzschneiden unter Verwendung von Stickstoff als Prozessgas durchgeführt. Hierfür wird die Leistung der Bearbeitungslaserquelle 18 auf die im Beispiel maximal verfügbaren 12 kW eingestellt und es wird ein kleiner Abstand A der Durchgangsöffnung 17 zur Schnittstelle 14 gewählt (Fig. 1a und 2a). Auf diese Weise wird die Numerische Apertur der Einrichtung zum Formen des Bearbeitungslaserstrahls 15 auf ungefähr 0,13 eingestellt. Der divergierende Laserstrahl 15 durchläuft die Durchgangsöffnung 17. Da Letztere in einem kleinen Abstand A zur Schnittstelle 14 positioniert ist, passieren sowohl der Kernbereich 15a als auch beide Randbereiche 15b und 15c des Laserstrahls 15 die Durchgangsöffnung 17. So breitet sich der Laserstrahl 15 hinter der Durchgangsöffnung 17 mit einem relativ großen Divergenzwinkel aus. Der Durchgangsöffnung 17 nachfolgend können Optiken bzw. optische Elemente angeordnet sein, wie z. B. mindestens eine Linse, welche den Laserstrahl auf das Werkstück fokussiert. Schließlich tritt der Laserstrahl 15 aus der Austrittsöffnung 13 des Laserbearbeitungskopfes 10 aus und trifft auf das Werkstück 12. Aufgrund des großen Divergenzwinkels wird der Laserstrahl 15 mit seiner Laserleistung für das Schmelzschneiden optimal genutzt.

Anschließend wird im vorliegenden Beispiel ein Brennschneiden unter Verwendung von Sauerstoff als Prozessgas durchgeführt. Hierfür wird die Leistung der Bearbeitungslaserquelle 18 auf 6 kW eingestellt und es wird ein großer Abstand A der Durchgangsöffnung 17 zur Schnittstelle 14 gewählt (Fig. 1b und 2b). Auf diese Weise wird die Numerische Apertur der Einrichtung zum Formen des Bearbeitungslaserstrahls auf 0,105 eingestellt. Da die Durchgangsöffnung in einem relativ großen Abstand A zur Schnittstelle 14 positioniert ist, wird, wenn der divergierende Laserstrahl 15 durch die Durchgangsöffnung 17 tritt, der Randbereich 15c abgeschnitten. Es passieren somit lediglich der Kernbereich 15a und der innere Randbereich 15b des Laserstrahls 15 die Durchgangsöffnung 17. So breitet sich der Laserstrahl 15 hinter der Durchgangsöffnung 17 mit einem relativ kleinen Divergenzwinkel aus. Schließlich tritt der Laserstrahl 15 aus der Austrittsöffnung 13 des Laserbearbeitungskopfes 10 aus und trifft auf das Werkstück 12. Auf diese Weise wird vermieden, dass der Randbereich 15c des Laserstrahls 15 beim Brennschneiden das Werkstück 12 um die Bearbeitungszone unerwünscht aufheizt. Da das Brennscheiden vorliegend mit einer relativ kleinen Leistung der Laserquelle vorgenommen wird, werden dabei über 95% der Laserleistung genutzt und nur wenig Laserleistung bleibt ungenutzt.

In einer Modifikation dieses beispielhaften Verfahrens können das Brennschneiden und das Schmelzschneiden jeweils mit der gleichen Laserleistung ausgeführt werden, z.B. bei 10 kW. Dabei wird für das Brennschneiden ein größerer Abstand A und eine kleinere Numerische Apertur gewählt als für das Schmelzschneiden.

Wie im vorliegenden Beispiel veranschaulicht ist, ermöglichen der Bearbeitungskopf und das Verfahren von Ausführungsformen jeweils eine einfache Einstellung der Numerischen Apertur und des Divergenzwinkels, unter welchem sich der Laserstrahl 15 in Richtung des zu bearbeitenden Werkstücks 12 ausbreiten kann. Für das Brennschneiden wird bevorzugt eine kleinere Numerische Apertur gewählt als für das Schmelzschneiden.

In einem weiteren Beispiel kann die Einrichtung 16 zum Formen des Bearbeitungslaserstrahls mehrere Durchgangsöffnungen gleicher oder unterschiedlicher Größe bereitstellen, die an unterschiedlichen Positionen im Strahlengang positionierbar, z.B. einschiebbar, sind. Auch mit diesem Beispiel kann für das Brennschneiden eine kleinere Numerische Apertur gewählt werden als für das Schmelzschneiden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur zum Laserschneiden angewendet werden kann, sondern auch für andere Laserbearbeitungsprozesse. Des Weiteren können die Bauteile des Laserbearbeitungskopfes 10 auf mehrere physikalische Produkte verteilt realisiert werden.

### Bezugszeichenliste

- 10: Laserbearbeitungskopf
- 12: Werkstück
- 13: Austrittsöffnung
- 14: Schnittstelle
- 15: Bearbeitungslaserstrahl
- 15a: Kernbereich
- 15b, 15c: Randbereich
- 16: Einrichtung zum Formen des Bearbeitungslaserstrahls
- 17: Durchgangsöffnung
- 18: Bearbeitungslaserquelle
- 18a: Laserquellenmodul
- 18b: Transportfaser
- 19: Blende
- 20: Vorrichtung zur Kühlung
- 21: Antrieb

- A: Abstand der Durchgangsöffnung zur Schnittstelle in Richtung der optischen Achse

- X: Optische Achse

## Patentansprüche

1. Laserbearbeitungskopf zur Laserbearbeitung eines Werkstücks (12), insbesondere zum Laserschneiden beinhaltend Brennschneiden und Schmelzschneiden, mit
einer Schnittstelle (14) für eine Bearbeitungslaserquelle (18) zum Erzeugen eines Bearbeitungslaserstrahls (15); und einer Einrichtung (16) zum Formen des Bearbeitungslaserstrahls (15) senkrecht zu seiner Ausbreitungsrichtung, wobei die Einrichtung (16) zum Formen des Bearbeitungslaserstrahls mindestens eine Durchgangsöffnung (17) für den Bearbeitungslaserstrahl aufweist, deren Abstand (A) zur Schnittstelle (14) einstellbar ist, wobei die Einrichtung (16) zum Formen des Bearbeitungslaserstrahls mindestens eine Blende (19) aufweist, die die mindestens eine Durchgangsöffnung (17) bereitstellt, **dadurch gekennzeichnet, dass** die Oberfläche der mindestens einen Blende (19) ausgebildet ist zum Absorbieren der Leistung der Bearbeitungslaserquelle (18) in einem Anteil von mindestens 90%.

2. Laserbearbeitungskopf nach Anspruch 1,
wobei eine Numerische Apertur der Einrichtung (16) zum Formen des Bearbeitungslaserstrahls (15) einstellbar ist und/oder in einem Wertebereich von kleiner oder gleich 0,125 einstellbar ist;
wobei die mindestens eine Durchgangsöffnung (17) für den Bearbeitungslaserstrahl in Ausbreitungsrichtung und/oder entgegen der Ausbreitungsrichtung verschiebbar ist; und/oder
wobei die Einrichtung (16) zum Formen des Bearbeitungslaserstrahls mehrere Durchgangsöffnungen (17) gleicher oder unterschiedlicher Größe aufweist, die im Strahlengang des Bearbeitungslaserstrahls (15) mit variablen Abständen zur Schnittstelle (14) positionierbar sind.

3. Laserbearbeitungskopf nach Anspruch 2,
wobei die Einrichtung (16) zum Formen des Bearbeitungslaserstrahls mit einem Antrieb zum Einstellen des Abstands (A) versehen ist, der mittels einer Steuerungseinheit ansteuerbar ist;
wobei die Numerische Apertur der Einrichtung (16) zum Formen des Bearbeitungslaserstrahls (15) für ein Brennschneiden in einem Wertebereich von 0,09 bis 0,125, bevorzugt von 0,09 bis 0,115, mehr bevorzugt von 0,095 bis 0,105, einstellbar ist; und/oder
wobei die Numerische Apertur der Einrichtung (16) zum Formen des Bearbeitungslaserstrahls (15) für ein Schmelzschneiden auf einen Wert größer oder gleich 0,1 einstellbar ist; und/oder
wobei der Abstand (A) der mindestens einen Durchgangsöffnung (17) zur Schnittstelle (14) und/oder die Numerische Apertur der Einrichtung (16) zum Formen des Bearbeitungslaserstrahls in Abhängigkeit von einem Prozessgas, der Größe der Durchgangsöffnung, der für die Laserbearbeitung gewählten oder eingestellten Leistung der Bearbeitungslaserquelle, der Strahlform und/oder der Divergenz des von der Bearbeitungslaserquelle (18) erzeugten Bearbeitungslaserstrahls einstellbar ist.

4. Laserbearbeitungskopf nach einem der vorstehenden Ansprüche,
wobei die Oberfläche der Einrichtung (16) zum Formen des Bearbeitungslaserstrahls ausgebildet ist zum Absorbieren der Leistung der Bearbeitungslaserquelle (18) in einem Anteil von mindestens 90%, bevorzugt mindestens 95%, mehr bevorzugt in einem Anteil von 100%, und/oder zum Reflektieren des Bearbeitungslaserstrahls (15) in einem Anteil von höchstens 10%, bevorzugt von höchstens 5%, mehr bevorzugt in einem Anteil von 0%; und/oder
wobei die Oberfläche der mindestens einen Blende (19) ausgebildet ist zum Absorbieren der Leistung der Bearbeitungslaserquelle (18) in einem Anteil von mindestens 95%, mehr bevorzugt in einem Anteil von 100%, und/oder zum Reflektieren des Bearbeitungslaserstrahls (15) in einem Anteil von höchstens 10%, bevorzugt von höchstens 5%, mehr bevorzugt in einem Anteil von 0%.

5. Laserbearbeitungskopf nach einem der vorstehenden Ansprüche,
wobei die Einrichtung (16) zum Formen des Bearbeitungslaserstrahls (15) eine Vorrichtung (20) zur Kühlung ihrer Oberfläche, insbesondere der Oberfläche der mindestens einen Blende (19), aufweist.

6. Verwendung eines Laserbearbeitungskopfes (10) nach einem der vorstehenden Ansprüche zum Laserschneiden beinhaltend Brennschneiden und/oder Schmelzschneiden eines Werkstücks (12) .

7. Verfahren zum Laserbearbeiten eines Werkstücks, insbesondere zum Laserschneiden beinhaltend Brennschneiden und Schmelzschneiden, mit einem Laserbearbeitungskopf (10) nach einem der Ansprüche 1 bis 5, wobei der Laserbearbeitungskopf (10) an der Schnittstelle (14) mit einer Bearbeitungslaserquelle (18) zum Erzeugen eines Bearbeitungslaserstrahls (15) verbunden ist;
wobei das Verfahren aufweist
- Erzeugen des Bearbeitungslaserstrahls (15);
- Bestrahlen des Werkstücks (12) mit dem Bearbeitungslaserstrahl; und
- Formen des Bearbeitungslaserstrahls senkrecht zu seiner Ausbreitungsrichtung, wobei der Abstand (A) der mindestens einen Durchgangsöffnung (17) zur Schnittstelle (14) eingestellt wird.

8. Verfahren nach Anspruch 7,
wobei die Numerische Apertur der Einrichtung (16) zum Formen des Bearbeitungslaserstrahls eingestellt wird; und/oder
wobei die Numerische Apertur der Einrichtung (16) zum Formen des Bearbeitungslaserstrahls in einem Wertebereich von kleiner oder gleich 0,125 eingestellt wird; und/oder wobei die Numerische Apertur der Einrichtung (16) zum Formen des Bearbeitungslaserstrahls für ein Brennschneiden in einem Wertebereich von 0,09 bis 0,125, bevorzugt von 0,09 bis 0,115, mehr bevorzugt von 0,095 bis 0,105, eingestellt wird; und/oder
wobei die Numerische Apertur der Einrichtung (16) zum Formen des Bearbeitungslaserstrahls für ein Schmelzschneiden auf einen Wert größer oder gleich 0,1 eingestellt wird; und/oder
wobei der Abstand (A) der mindestens einen Durchgangsöffnung (17) zur Schnittstelle (14) und/oder die Numerische Apertur der Einrichtung (16) zum Formen des Bearbeitungslaserstrahls in Abhängigkeit von einem Prozessgas, der Größe der Durchgangsöffnung, der für die Laserbearbeitung gewählten oder eingestellten Leistung der Bearbeitungslaserquelle, der Strahlform und/oder der Divergenz des von der Bearbeitungslaserquelle (18) erzeugten Bearbeitungslaserstrahls eingestellt wird.

9. Verfahren nach einem der Ansprüche 7 und 8,
wobei die mindestens eine Durchgangsöffnung (17) für den Bearbeitungslaserstrahl in Ausbreitungsrichtung und/oder entgegen der Ausbreitungsrichtung verschoben wird; und/oder
wobei die Einrichtung (16) zum Formen des Bearbeitungslaserstrahls mehrere Durchgangsöffnungen (17) gleicher oder unterschiedlicher Größe aufweist, die im Strahlengang des Bearbeitungslaserstrahls (15) mit variablen Abständen (A) zur Schnittstelle (14) positioniert werden.

10. Verfahren nach einem der Ansprüche 7 bis 9,
wobei die Oberfläche der Einrichtung (16) zum Formen des Bearbeitungslaserstrahls, insbesondere die Oberfläche der mindestens einen Blende (19), gekühlt wird; und/oder
wobei die Leistung der Bearbeitungslaserquelle (18) in einem Wertebereich von 500 W bis 30 kW, bevorzugt kleiner oder gleich 20 kW, mehr bevorzugt kleiner oder gleich 10 kW, gewählt oder eingestellt wird.

11. Verfahren nach einem der Ansprüche 7 bis 10,
wobei für ein Brennschneiden des Werkstücks (12) die Numerische Apertur der Einrichtung (16) zum Formen des Bearbeitungslaserstrahls kleiner oder gleich 0,125 eingestellt wird und die Leistung der Bearbeitungslaserquelle (18) kleiner oder gleich 20 kW, bevorzugt kleiner oder gleich 10 kW, mehr bevorzugt kleiner oder gleich 6 kW, gewählt oder eingestellt wird; und/oder
wobei für ein Schmelzschneiden die Numerische Apertur der Einrichtung (16) zum Formen des Bearbeitungslaserstrahls größer oder gleich 0,1 eingestellt wird und die Leistung der Bearbeitungslaserquelle (18) größer oder gleich 6 kW, bevorzugt größer oder gleich 10 kW, gewählt oder eingestellt wird.

## Claims

1. A laser machining head for laser machining of a workpiece (12), in particular for laser cutting including flame cutting and fusion cutting, having an interface (14) for a machining laser source (18) for generating a machining laser beam (15); and a device (16) for shaping the machining laser beam (15) perpendicular to its direction of propagation, wherein the device (16) for shaping the machining laser beam has at least one through-opening (17) for the machining laser beam, the distance (A) of which from the interface (14) can be adjusted, wherein the device (16) for shaping the machining laser beam has at least one screen (19), which provides the at least one through-opening (17), **characterised in that** the surface of the at least one screen (19) is designed to absorb the power of the machining laser source (18) in a proportion of at least 90%.

2. The laser machining head according to claim 1,
wherein a numerical aperture of the device (16) for shaping the machining laser beam (15) can be adjusted and/or can be set in a value range of less than or equal to 0.125;
wherein the at least one through-opening (17) for the machining laser beam can be displaced in the direction of propagation and/or counter to the direction of propagation; and/or
wherein the device (16) for shaping the machining laser beam has multiple through-openings (17) of the same or different size, which can be positioned in the beam path of the machining laser beam (15) at variable distances from the interface (14).

3. The laser machining head according to claim 2,
wherein the device (16) for shaping the machining laser beam is provided with a drive for adjusting the distance (A), which can be controlled by means of a control unit;
wherein the numerical aperture of the device (16) for shaping the machining laser beam (15) for flame cutting can be set in a value range from 0.09 to 0.125, preferably from 0.09 to 0.115, more preferably from 0.095 to 0.105; and/or.
wherein the numerical aperture of the device (16) for shaping the machining laser beam (15) for fusion cutting can be set to a value greater than or equal to 0.1; and/or
wherein the distance (A) of the at least one through-opening (17) from the interface (14) and/or the numerical aperture of the device (16) for shaping the machining laser beam is adjustable as a function of a process gas, the size of the through-opening, the power of the machining laser source selected or set for the laser machining, the beam shape and/or the divergence of the machining laser beam generated by the machining laser source (18).

4. The laser machining head according to any one of the preceding claims,
wherein the surface of the device (16) for shaping the machining laser beam is designed to absorb the power of the machining laser source (18) in a proportion of at least 90%, preferably at least 95%, more preferably in a proportion of 100%, and/or to reflect the machining laser beam (15) in a proportion of at most 10%, preferably at most 5%, more preferably in a proportion of 0%; and/or
wherein the surface of the at least one screen (19) is designed to absorb the power of the machining laser source (18) in a proportion of at least 95%, more preferably in a proportion of 100%, and/or to reflect the machining laser beam (15) in a proportion of at most 10%, preferably at most 5%, more preferably in a proportion of 0%.

5. The laser machining head according to any one of the preceding claims,
wherein the device (16) for shaping the machining laser beam (15) has an apparatus (20) for cooling its surface, in particular the surface of the at least one screen (19).

6. A use of a laser machining head (10) according to any one of the preceding claims for laser cutting, including flame cutting and/or fusion cutting, of a workpiece (12).

7. A method for laser machining a workpiece, in particular for laser cutting including flame cutting and fusion cutting, with a laser machining head (10) according to any one of claims 1 to 5, wherein the laser machining head (10) is connected at the interface (14) to a machining laser source (18) for generating a machining laser beam (15);
wherein the method includes
- generating the machining laser beam (15);
- irradiating the workpiece (12) with the machining laser beam; and
- shaping the machining laser beam perpendicular to its direction of propagation,
wherein the distance (A) of the at least one through-opening (17) from the interface (14) is adjusted.

8. The method according to claim 7,
wherein the numerical aperture of the device (16) for shaping the machining laser beam is adjusted; and/or
wherein the numerical aperture of the device (16) for shaping the machining laser beam is set in a value range of less than or equal to 0.125; and/or wherein the numerical aperture of the device (16) for shaping the machining laser beam for flame cutting is set in a value range from 0.09 to 0.125, preferably from 0.09 to 0.115, more preferably from 0.095 to 0.105; and/or
wherein the numerical aperture of the means (16) for shaping the machining laser beam for fusion cutting is set to a value greater than or equal to 0.1; and/or
wherein the distance (A) of the at least one through-opening (17) from the interface (14) and/or the numerical aperture of the device (16) for shaping the machining laser beam is adjusted as a function of a process gas, the size of the through-opening, the power of the machining laser source selected or set for the laser machining, the beam shape and/or the divergence of the machining laser beam generated by the machining laser source (18).

9. The method according to any one of claims 7 and 8,
wherein the at least one through-opening (17) for the machining laser beam is displaced in the direction of propagation and/or counter to the direction of propagation; and/or
wherein the device (16) for shaping the machining laser beam has multiple through-openings (17) of the same or different size, which are positioned in the beam path of the machining laser beam (15) at variable distances (A) from the interface (14).

10. The method according to any one of claims 7 to 9,
wherein the surface of the device (16) for shaping the machining laser beam, in particular the surface of the at least one aperture (19), is cooled; and/or wherein the power of the machining laser source (18) is selected or set in a value range from 500 W to 30 kW, preferably less than or equal to 20 kW, more preferably less than or equal to 10 kW.

11. The method according to any one of claims 7 to 10,
wherein for flame cutting the workpiece (12), the numerical aperture of the device (16) for shaping the machining laser beam is set to be less than or equal to 0.125 and the power of the machining laser source (18) is selected or set to be less than or equal to 20 kW, preferably less than or equal to 10 kW, more preferably less than or equal to 6 kW; and/or
wherein the numerical aperture of the device (16) for shaping the machining laser beam is set to be greater than or equal to 0.1 for fusion cutting and the power of the machining laser source (18) is selected or set to be greater than or equal to 6 kW, preferably greater than or equal to 10 kW.

## Revendications

1. Tête d'usinage au laser pour l'usinage au laser d'une pièce (12), en particulier pour le découpage au laser, y compris le découpage au chalumeau et le découpage par fusion, comportant une interface (14) pour une source laser d'usinage (18) pour générer un faisceau laser d'usinage (15) ; et un dispositif (16) de mise en forme du faisceau laser d'usinage (15) perpendiculairement à sa direction de propagation, dans laquelle le dispositif (16) de mise en forme du faisceau laser d'usinage présente au moins une ouverture traversante (17) pour le faisceau laser d'usinage, dont la distance (A) à partir de l'interface (14) est réglable, dans laquelle le dispositif (16) de mise en forme du faisceau laser d'usinage présente au moins un diaphragme (19) qui fournit l'au moins une ouverture traversante (17), **caractérisée en ce que** la surface du au moins un diaphragme (19) est conçue pour absorber la puissance de la source laser d'usinage (18) dans une proportion d'au moins 90 %.

2. Tête d'usinage au laser selon la revendication 1,
dans laquelle une ouverture numérique du dispositif (16) de mise en forme du faisceau laser d'usinage (15) est réglable et/ou est réglable dans une plage de valeurs inférieure ou égale à 0,125 ;
dans laquelle l'au moins une ouverture traversante (17) pour le faisceau laser d'usinage est déplaçable dans la direction de propagation et/ou à l'opposé de la direction de propagation ;
et/ou
dans laquelle le dispositif (16) de mise en forme du faisceau laser d'usinage présente une pluralité d'ouvertures traversantes (17) de taille identique ou différente, qui peuvent être positionnées dans le trajet du faisceau laser d'usinage (15) à des distances variables de l'interface (14).

3. Tête d'usinage au laser selon la revendication 2,
dans laquelle le dispositif (16) de mise en forme du faisceau laser d'usinage est pourvu d'un entraînement pour régler la distance (A), qui peut être commandé au moyen d'une unité de commande ;
dans laquelle l'ouverture numérique du dispositif (16) de mise en forme du faisceau laser d'usinage (15) pour un découpage au chalumeau est réglable dans une plage de valeurs de 0,09 à 0,125, de préférence de 0,09 à 0,115, plus préférablement de 0,095 à 0,105 ; et/ou
dans laquelle l'ouverture numérique du dispositif (16) de mise en forme du faisceau laser d'usinage (15) pour le découpage par fusion est réglable à une valeur supérieure ou égale à 0,1 ; et/ou
dans laquelle la distance (A) de l'au moins une ouverture traversante (17) à l'interface (14) et/ou l'ouverture numérique du dispositif (16) de mise en forme du faisceau laser d'usinage est réglable en fonction d'un gaz de traitement, de la taille de l'ouverture traversante, de la puissance choisie ou réglée de la source laser d'usinage, de la forme du faisceau et/ou de la divergence du faisceau laser d'usinage généré par la source laser d'usinage (18).

4. Tête d'usinage au laser selon l'une quelconque des revendications précédentes,
dans laquelle la surface du dispositif (16) de mise en forme du faisceau laser d'usinage est conçue pour absorber la puissance de la source laser d'usinage (18) dans une proportion d'au moins 90 %, de préférence d'au moins 95 %, plus préférablement dans une proportion de 100 %, et/ou pour réfléchir le faisceau laser d'usinage (15) dans une proportion d'au plus 10 %, de préférence d'au plus 5 %, plus préférablement dans une proportion de 0 % ; et/ou
dans laquelle la surface de l'au moins un diaphragme (19) est conçue pour absorber la puissance de la source laser d'usinage (18) dans une proportion d'au moins 95 %, plus préférablement dans une proportion de 100 % et/ou pour réfléchir la faisceau laser d'usinage (15) dans une proportion d'au plus 10 %, de préférence d'au plus 5 %, plus préférablement dans une proportion de 0 %.

5. Tête d'usinage au laser selon l'une quelconque des revendications précédentes,
dans laquelle le dispositif (16) de mise en forme du faisceau laser d'usinage (15) présente un dispositif (20) pour refroidir sa surface, en particulier la surface du au moins un diaphragme (19).

6. Utilisation d'une tête d'usinage au laser (10) selon l'une quelconque des revendications précédentes pour le découpage au laser, y compris le découpage au chalumeau et/ou le découpage par fusion, d'une pièce (12).

7. Procédé pour l'usinage au laser d'une pièce, en particulier pour le découpage au laser, y compris le découpage au chalumeau et le découpage par fusion, comportant une tête d'usinage au laser (10) selon l'une quelconque des revendications 1 à 5, dans lequel la tête d'usinage au laser (10) est reliée à l'interface (14) avec une source laser d'usinage (18) pour générer un faisceau laser d'usinage (15) ;
le procédé présentant
- la génération du faisceau laser d'usinage (15) ;
- l'irradiation de la pièce (12) avec le faisceau laser d'usinage ; et
- la mise en forme du faisceau laser d'usinage perpendiculairement à sa direction de propagation, dans lequel la distance (A) de l'au moins une ouverture traversante (17) à l'interface (14) est réglée.

8. Procédé selon la revendication 7,
dans lequel l'ouverture numérique du dispositif (16) de mise en forme du faisceau laser d'usinage est réglée ; et/ou
dans lequel l'ouverture numérique du dispositif (16) de mise en forme du faisceau laser d'usinage est réglée dans une plage de valeurs inférieure ou égale à 0,125 ; et/ou dans lequel l'ouverture numérique du dispositif (16) de mise en forme du faisceau laser d'usinage pour un découpage au chalumeau est réglée dans une plage de valeurs de 0,09 à 0,125, de préférence de 0,09 à 0,115, plus préférablement de 0,095 à 0,105 ; et/ou
dans lequel l'ouverture numérique du dispositif (16) de mise en forme du faisceau laser d'usinage pour un découpage par fusion est réglée à une valeur supérieure ou égale à 0,1 ; et/ou
dans lequel la distance (A) de l'au moins une ouverture traversante (17) à l'interface (14) et/ou l'ouverture numérique du dispositif (16) de mise en forme du faisceau laser d'usinage est réglable en fonction d'un gaz de traitement, de la taille de l'ouverture traversante, de la puissance choisie ou réglée de la source laser d'usinage, de la forme du faisceau et/ou de la divergence du faisceau laser d'usinage généré par la source laser d'usinage (18).

9. Procédé selon l'une quelconque des revendications 7 et 8,
dans lequel l'au moins une ouverture de passage (17) pour le faisceau laser d'usinage est déplacée dans la direction de propagation et/ou à l'opposé de la direction de propagation ; et/ou dans lequel le dispositif (16) de mise en forme du faisceau laser d'usinage présente une pluralité d'ouvertures traversantes (17) de taille identique ou différente, qui sont positionnées dans le trajet du faisceau laser d'usinage (15) à des distances variables (A) de l'interface (14).

10. Procédé selon l'une quelconque des revendications 7 à 9,
dans lequel la surface du dispositif (16) de mise en forme du faisceau laser d'usinage, en particulier la surface du au moins un diaphragme (19), est refroidie ; et/ou dans lequel la puissance de la source laser d'usinage (18) est choisie ou réglée dans une plage de valeurs de 500 W à 30 kW, de préférence inférieure ou égale à 20 kW, plus préférablement inférieure ou égale à 10 kW.

11. Procédé selon l'une quelconque des revendications 7 à 10,
dans lequel pour le découpage au chalumeau de la pièce (12), l'ouverture numérique du dispositif (16) de mise en forme du faisceau laser d'usinage est réglée pour être inférieure ou égale à 0,125 et la puissance de la source laser d'usinage (18) est choisie ou réglée pour être inférieure ou égale à 20 kW, de préférence inférieure ou égale à 10 kW, plus préférablement inférieure ou égale à 6 kW ; et/ou dans lequel pour un découpage par fusion, l'ouverture numérique du dispositif (16) de mise en forme du faisceau laser d'usinage est réglée pour être supérieure ou égale à 0,1 et la puissance de la source laser d'usinage (18) est choisie ou réglée pour être supérieure ou égale à 6 kW, de préférence supérieure ou égale à 10 kW.
